# EUROPÄISCHE PATENTSCHRIFT

(11) **EP 0 363 916 B1**
(45) Veröffentlichungstag und Bekanntmachung des Hinweises auf die Patenterteilung: **20.01.1993**
(21) Anmeldenummer: 89118850.0
(22) Anmeldetag: 11.10.1989
(51) Int. Cl.: A01D 27/04

(54) **Vorrichtung zum Ernten von Feldfrüchten, insbesondere Rüben**
Device for harvesting field crops, in particular beets
Dispositif pour récolter les fruits des champs en particulier des betteraves

(30) Priorität: 12.10.1988 DE 3834796
(43) Veröffentlichungstag der Anmeldung: 18.04.1990
(73) Patentinhaber: ROPA FAHRZEUG- UND MASCHINENBAU GMBH, D-84097 Herrngiersdorf (DE)
(72) Erfinder: Paintner, Hermann, D-8301 Herrngiersdorf (DE)
(74) Vertreter: Gustorf, Gerhard, Dipl.-Ing.

(56) Entgegenhaltungen:
- DE-A- 2 149 480
- DE-A- 2 315 653
- DE-A- 2 721 125
- DE-A- 2 730 281

## Beschreibung

Die Erfindung betrifft eine Vorrichtung zum Ernten von Feldfrüchten, insbesondere Rüben, mit einem Fahrgestell, an dem eine Blattschneideeinheit sowie eine Rodeeinheit mit einer Reihe von an einem Träger angeordneten Rodescharen gelagert sind, an die sich Stetigförderer für die Weiterleitung der geernteten Feldfrüchte zu einem Sammelraum anschließen, und mit Tasträder die relativ zu der Rodeeinheit höhenverstellbar sind, wie sie aus der Druckschrift DE-A -23 15 653 bekanntgeworden ist.

Bei derartigen Vorrichtungen ist es erforderlich, daß sich die Rodeeinheit während des Erntevorgangs an Bodenunebenheiten anpaßt. Hierzu ist auch bekannt, Sensoren zu verwenden, die den Boden abtasten und so die Tiefenführung der Rodeschare steuern. Während des Erntens läßt es sich jedoch nicht vermeiden, daß sich Unkraut und Blattreste immer wieder stauen, was bei den Sensoren zu Falschmeldungen führt, die ein unerwünschtes Anheben der Rodeeinheit zur Folge haben.

Der Erfindung liegt die Aufgabe zugrunde, eine Vorrichtung der Eingangs umrissenen Bauart zur Verfügung zu stellen, bei der die Tiefensteuerung der Rodeeinheit mit geringem Aufwand erheblich verbessert wird und nur auf tatsächliche Bodenunebenheiten anspricht, nicht jedoch auf Ansammlungen von Unkrautresten oder kleinen Erdbrocken.

Erfindungsgemäß wird diese Aufgabe dadurch gelöst, daß Tasträder zwischen allen Rodescharen der Rodeeinheit angeordnet und auf einer gemeinsamen Welle gelagert sind.

Während des Erntevorgangs rollen diese Tasträder, die aus robusten sogenannten Seitenfördersternen bestehen, ständig auf dem Boden ab und folgen allen wesentlichen Bodenunebenheiten, während sie für den Erntevorgang unerhebliche Blattreste, Unkraut o. dgl. niederdrücken. Dadurch wird eine wesentlich bessere Tiefenführung der Rodeschare gewährleistet. Vorzugsweise befindet sich zwischen je zwei Rodescharen ein Tastrad, das damit gleichzeitig als Seitenführung für die geernteten Feldfrüchte dient und verhindert, daß diese vor der Weitergabe an die anschließenden Stetigförderer abrollen.

In Weiterbildung der Erfindung ist der als Querbalken ausgebildete Träger der Rodeschare über Längslenker am Fahrgestell winkelbeweglich aufgehängt. Dabei ist es vorteilhaft, wenn die Längslenker mittels eines Kugelgelenks o. dgl am Fahrgestell gelagert sind.

Damit eröffnet sich die Möglichkeit, die Rodeeinheit unabhängig von der Blattschneideeinheit seitlich zu verstellen, wenn sich dies während des Erntevorgangs als notwendig erweist. Für diese Relativverstellung kann ein Hydraulikzylinder vorgesehen sein, der über zwei Steuerleitungen mit wenigstens einer Sensoreinheit verbunden ist, die bei der Überschreitung vorgegebener Horizontalverstellwege einer zugeordneten Rodeschar anspricht. Bei Auftreten eines Fahrfehlers, beispielsweise beim seitlichen Abrutschen der gesamten Vorrichtung auf nassem Boden, kann mit diesen Maßnahmen die Rodeeinheit relativ zu der Blattschneideeinheit in Querrichtung verstellt werden, um diesen Fahrfehler wieder auszugleichen.

Es ist vorteilhaft, wenn der Rahmen für die Lagerung der Tasträder in Fahrtrichtung hinter der Rodeeinheit Schneckenwellen trägt, welche die Feldfrüchte zur Mitte fördern. An diese Schneckenwellen kann sich ein Gliederbandförderer anschließen, der die Feldfrüchte zwischen den Vorderrädern der Vorrichtung hindurch zu Siebrädern fördert, die eine Vorreinigung vornehmen. Die Siebräder sind vorzugsweise gegenläufig drehbar angetrieben und fördern die vorgereinigten Feldfrüchte zu einem Elevator, der den Transport zu einer Nachreinigungseinrichtung durchführt.

Die Nachreinigungseinrichtung besteht vorzugsweise aus zwei in Fahrtrichtung hintereinanderliegenden, gegenläufigen Gliederbandförderern, denen jeweils ein schräg nach oben führender Gliederbandförderer zugeordnet ist. Die platzsparende Anordnung der Nachreinigungseinrichtung vor dem Sammelraum, im allgemeinen einem Bunker, ist auch deshalb besonders günstig, weil sich die Gliederbandförderer längs zur Fahrtrichtung erstrecken, so daß in Querrichtung wenig Bauraum beansprucht wird.

Nach einem weiteren Merkmal der Erfindung sind die Blattschneideeinheit sowie die dazu im wesentlichen parallele Rodeeinheit schräg zur Längsachse der Vorrichtung angeordnet. Ferner ist die Vorderachse bezüglich der Hinterachse in Querrichtung versetzt angeordnet und hat vorzugsweise eine Winkelstellung zur Hinterachse.

Mit dieser besonders günstigen Maßnahme kann die Vorrichtung im sogenannten Hundegang eingesetzt werden. Das bedeutet, daß bei Erntebeginn, bei dem im allgemeinen zunächst in der Feldmitte eine Reihe vorsichtig durchfahren wird, die Vorrichtung so gelenkt wird, daß die Rodeeinheit schräg zu den Rübenreihen o. dgl. verläuft. Damit ergibt sich beispielsweise am rechten Vorderrad ein kleiner Abstand von den benachbarten Rüben. Erst beim Roden der folgenden Reihen wird die Vorrichtung so gefahren, daß die Rodeeinheit etwa rechtwinklig zur Grenzlinie des bereits gerodeten Bestandes verläuft; dabei bewegt sich dann das Fahrgestell im sogenannten Hundegang, d.h. der Abstand des Vorderrades und des Hinterrades auf der zum noch nicht gerodeten Teil des Feldes liegenden Seite ist so groß, daß eine Beschädigung der Feldfrüchte nicht zu befürchten ist, während auf der anderen Seite das Vorderrad und das Hinterrad schon auf dem bereits abgeernteten Teil abrollen.

Weitere Merkmale und Vorteile der Erfindung ergeben sich aus den Patentansprüche und aus der folgenden Beschreibung eines Ausführungsbeispiels, das in der Zeichnung dargestellt ist.

Es zeigen:
Figur 1 eine schematische Seitenansicht einer Vorrichtung gemäß der Erfindung,
Figur 2 eine vergrößerte Ausschnittsdarstellung der Figur 1,
Figur 3 eine schematische Draufsicht auf einen wesentlichen Teil der Vorrichtung,
Figur 4 eine Vorderansicht eines Teils der Rodeeinheit,
Figur 5 eine schematische Seitenansicht der Nachreinigungseinrichtung,
Figur 6 eine schematische Draufsicht auf die Nachreinigungseinrichtung,
Figur 7 eine schematische Draufsicht der Vorrichtung mit Fahrgestell und
Figur 8 eine Draufsicht eines Feldes zur Erläuterung des Erntevorgangs mit der Vorrichtung gemäß der Erfindung.

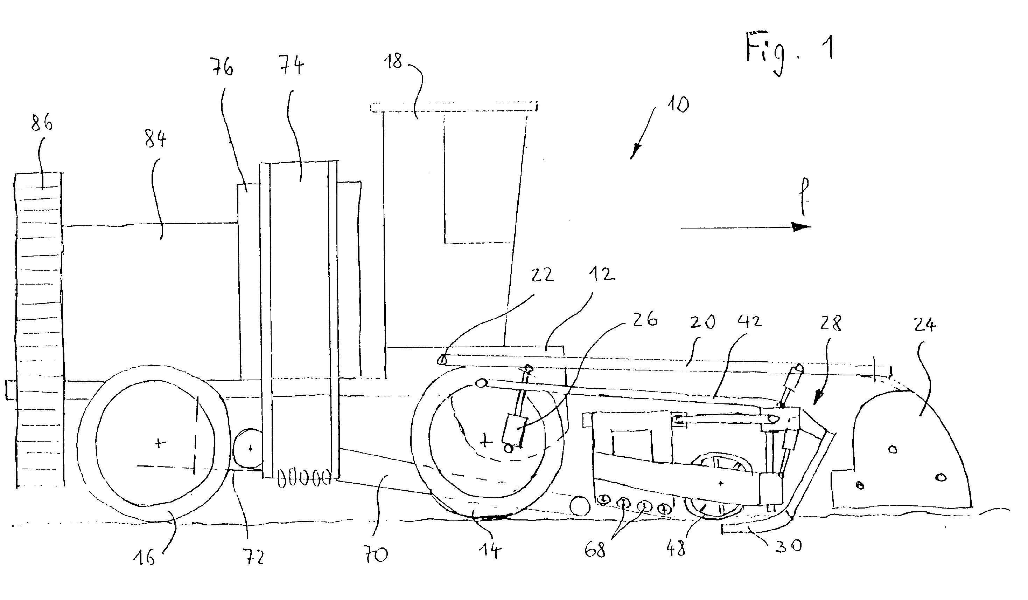

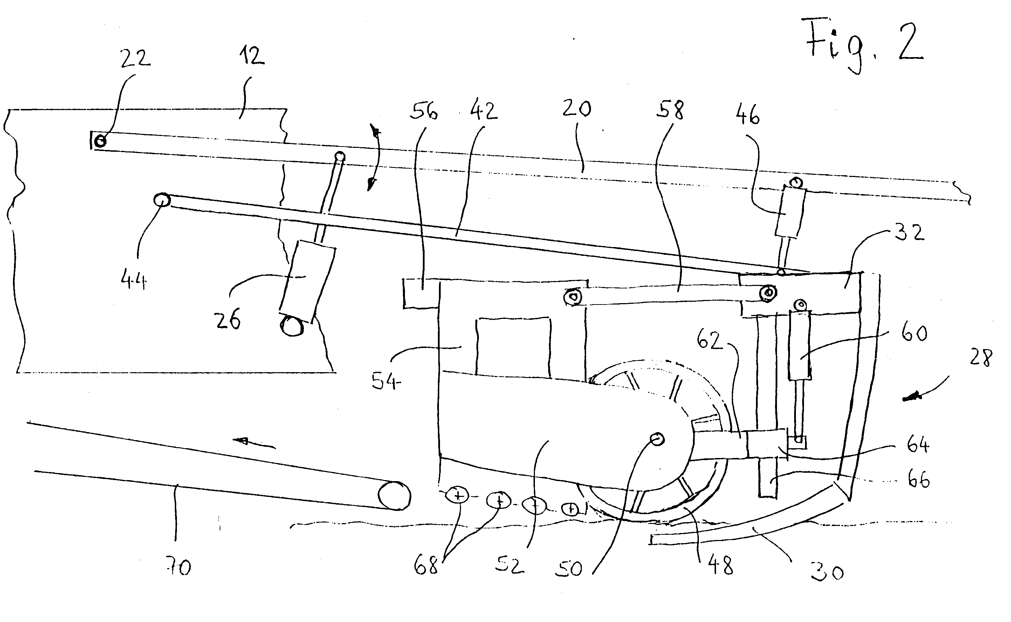

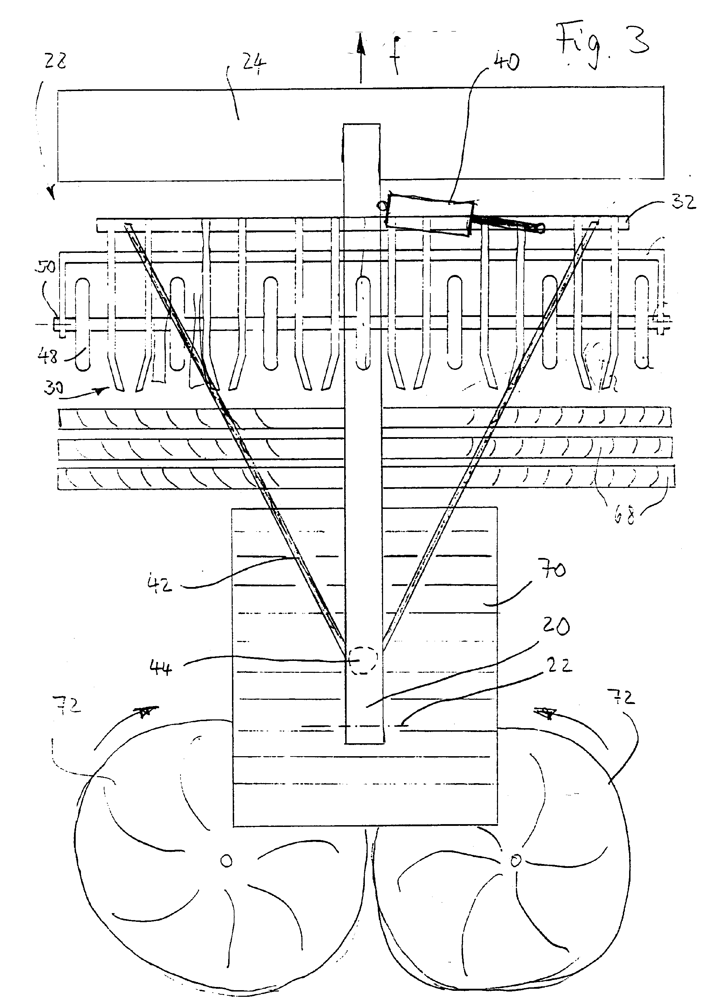

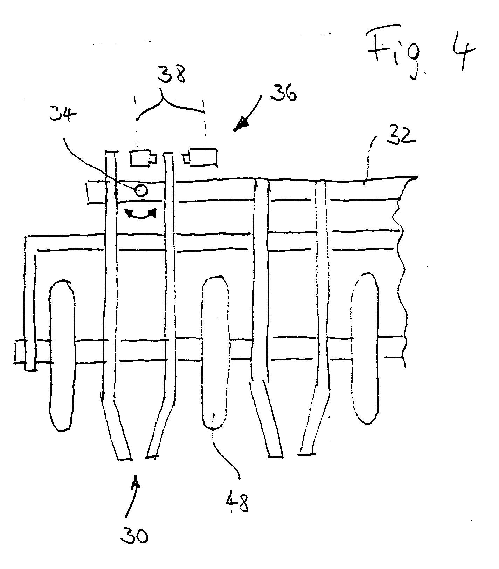

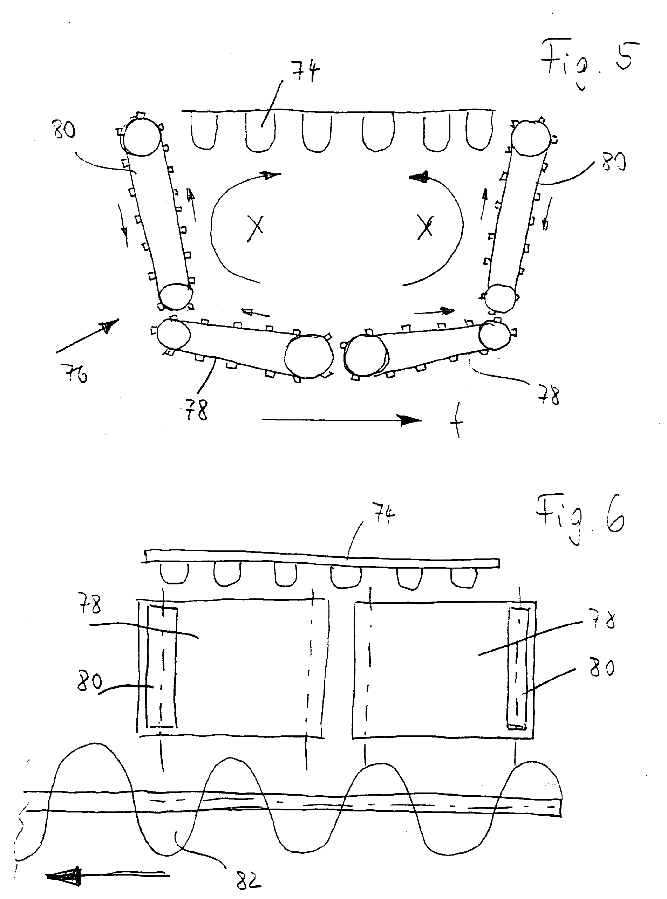

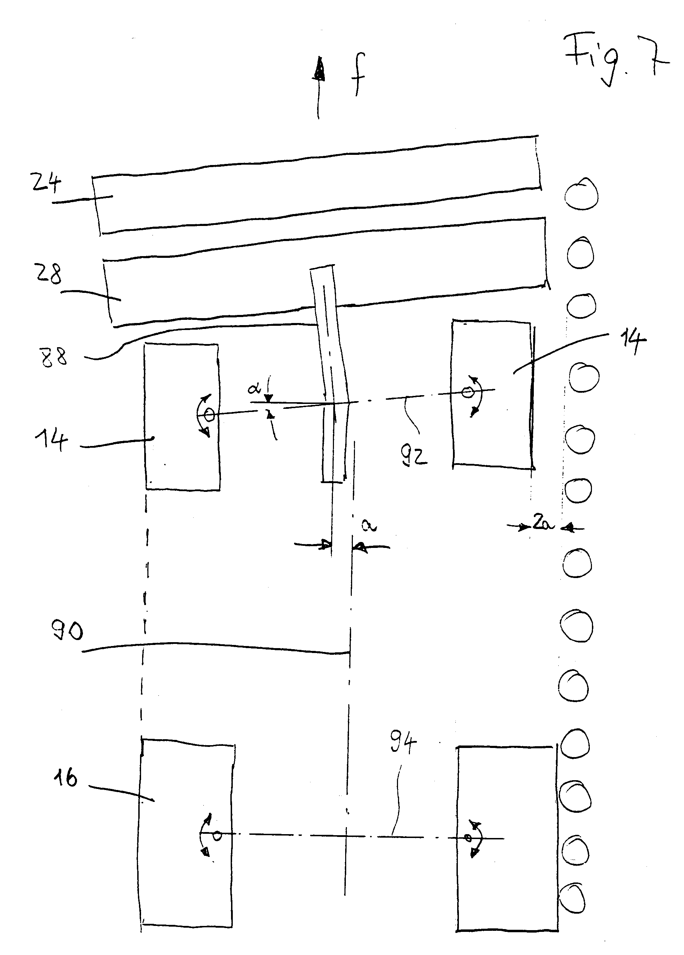

Figur 1 zeigt schematisch eine Rübenerntemaschine 10 mit einem Fahrgestell 12, an dem in bekannter Weise von einem nicht gezeigten Motor angetriebene Vorderräder 14 und Hinterräder 16 lenkbar aufgehängt sind. Der vordere Teil des Fahrgestells 12 trägt eine Fahrerkabine 18.

In den Figuren 1, 2 und 3 ist zu erkennen, daß am Fahrgestell 12 ein Längsbalken 20 um eine horizontale Schwenkachse 22 quer zur Fahrtrichtung f schwenkbar aufgehängt ist. An seinem vorderen Ende trägt der Längsbalken 20 eine an sich bekannte Blattschneideeinheit 24 zum Köpfen der zu erntenden Rüben. Zum Anheben und Absenken der Blattschneideeinheit 24 dient ein Hydraulikzylinder 26, der am Fahrgestell 12 aufgehängt ist und dessen Kolbenstange mit dem Längsbalken 20 verbunden ist.

In Fahrtrichtung hinter der Blattschneideeinheit 24 und vor den beiden Vorderrädern 14 befindet sich die erfindungsgemäß ausgebildete Rodeeinheit 28. Diese besteht in bekannter Weise aus einer Reihe von Rodescharen 30, die an einem als Querbalken 32 ausgebildeten Träger angeordnet sind. In Figur 4 ist angedeutet, daß die Rodeschare 30 um eine horizontale Achse 34 schwenkbar am Querbalken 32 aufgehängt sind, so daß sie Pendelbewegungen durchführen können, um über nicht gezeigte Fühler den Rübenreihen zu folgen. Den Rodescharen 30 sind dabei wenigstens teilweise Sensoreinheiten 36 zugeordnet, die feststellen, wenn die Rodeschare 30 über ein vorgegebenes Maß hinaus pendeln. Wenn dies der Fall ist, gibt die entsprechende Sensoreinheit 36 über eine ihrer beiden Leitungen 38 ein Steuersignal zu einem Hydraulikzylinder 40, der in Figur 3 eingezeichnet ist. Dieser Hydraulikzylinder 40 verbindet den Längsbalken 30 der seitlich starr gelagerten Blattschneideeinheit 24 mit dem Querbalken 32 der Rodeeinheit 28. Da der Querbalken 32 über zwei schräg verlaufende Längslenker 42 winkelbeweglich in einem Kugelgelenk 44 am Fahrgestell 12 aufgehängt ist, kann die gesamte Rodeeinheit 28 mittels des Hydraulikzylinders 40 quer zur Blattschneideeinheit 24 verstellt werden. Damit können in der beschriebenen Weise Fahrfehler ausgeglichen und die Rodeeinheit 28 entsprechend dem Reihenverlauf seitlich nachgeführt werden.

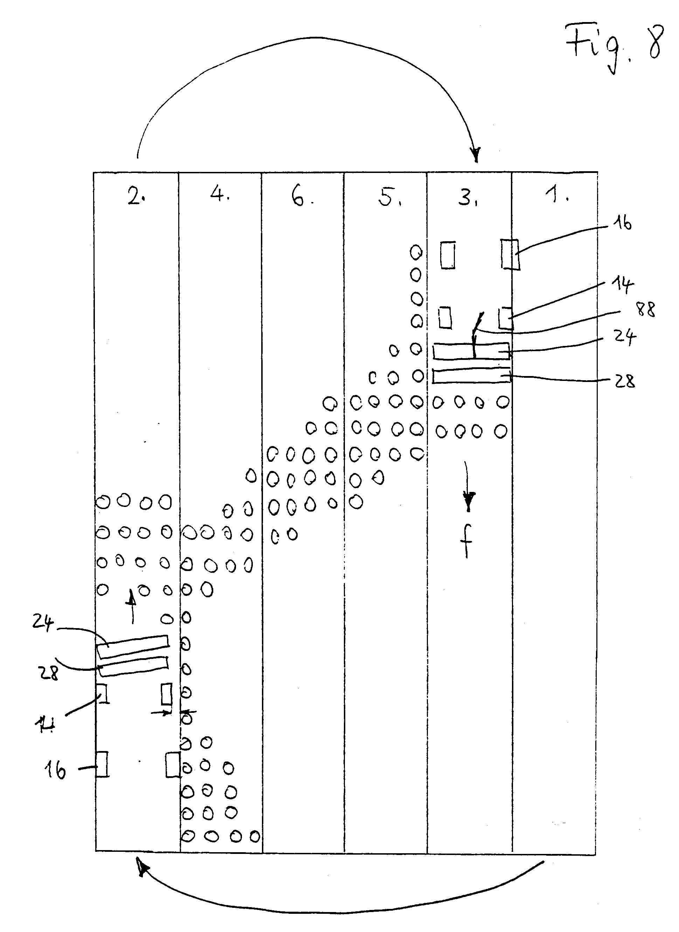

In Figur 2 ist angedeutet, daß der Längsbalken 20 der Blattschneideeinheit 24 über eine Hydraulikeinheit 46 mit dem Querbalken 32 der Rodeeinheit 28 verbunden ist. Damit kann die Rodeeinheit 28 relativ zur Blattschneideeinheit 24 in vertikaler Richtung verstellt werden. Während des Erntevorgangs ist die Hydraulikeinheit 46 jedoch im allgemeinen drucklos, so daß die Rodeeinheit 28 "schwimmend" gelagert ist und sich mit ihrem ganzen Gewicht auf dem Boden abstützen kann.

Gemäß der Erfindung ist zwischen jeweils zwei Rodescharen 30 der Rodeeinheit 28 ein Tastrad 48 vorgesehen, das wie ein sogenannter Seitenförderstern aus einem stabilen Rohrrahmen mit Speichen besteht. Die Tasträder 48 sind auf einer gemeinsamen Welle 50 angeordnet, die entweder angetrieben oder frei drehbar zwischen zwei seitlichen Wangen 52 einer Trageinheit 54 gelagert ist. Die Trageinheit 54 ist ihrerseits an einem Querträger 56 befestigt und über zwei seitliche Koppelstangen 58 gelenkig mit dem Querbalken 32 der Rodeeinheit 28 verbunden.

Die Tasträder 48 können in vertikaler Richtung relativ zu den Rodescharen 30 verstellt werden. Hierzu dienen zwei seitliche Hydraulikeinheiten 60, die mit einem Ende am Querbalken 32 und mit dem anderen Ende an einem festen Fortsatz 62 der Wangen 52 angelenkt sind. Jeder Fortsatz 62 trägt an seinem vorderen Ende eine Vertikalführung 64 für eine vom Querbalken 32 nach unten ragende Führungsstange 66.

Über die beschriebene Ausbildung der Rodeeinheit 28 gemäß der Erfindung kann der vertikale Abstand zwischen den Tasträdern 48 und den Rodescharen 30 eingestellt werden, um auf diese Weise die Eindringtiefe der Rodeschare 30 an die unterschiedlichen Frucht- und Bodenverhältnisse anzupassen. Diese Einstellung wird über die Hydraulikeinheit 60 entweder vor dem Erntevorgang fest vorgegeben, sie kann aber auch während des Erntevorgangs geändert werden.

Die Wangen 52 der Trageinheit 54 dienen in Fahrtrichtung hinter den Tasträdern 48 zur Lagerung von Schneckenwellen 68, die die Aufgabe haben, die von den Rodescharen 30 ausgehobenen Rüben aufzunehmen und zur Mitte hin zu fördern. Dort werden sie von einem Gliederbandförderer 70 übernommen, der zwischen den beiden Förderrädern 14 hindurch nach hinten führt und die Rüben auf zwei gegenläufig rotierende Siebsterne 72 wirft. Während des Transports auf dem Gliederbandförderer 70 und insbesondere auf den beiden Siebsternen 72 findet eine Vorreinigung der geernteten Rüben statt, die anschließend von den beiden Siebsternen 72 einem Elevator 74 übergeben werden. Dieser befördert die Rüben in eine hinter der Fahrerkabine 18 vorgesehene Nachreinigungseinrichtung 76, die in den Figuren 5 und 6 schematisch dargestellt ist. Sie besteht aus zwei in Fahrtrichtung hintereinander angeordneten, gegenläufigen Gliederbandförderern 78, denen jeweils ein schräg nach oben führender Gliederbandförderer 80 zugeordnet ist. Das Arbeitstrum jedes Gliederbandförderers 78 erfaßt die vom Elevator 74 übergebenen Rüben und fördert diese in Richtung auf den zugehörigen, schräg nach oben laufenden Gliederbandförderer 80, wodurch den Rüben eine Umwälzbewegung in Richtung des Pfeiles X der Figur 5 erteilt wird. Bei dieser Umwälzung findet eine Nachreinigung statt, wobei noch anhaftende Erdreste durch die Gliederbandförderer 78 nach unten hindurch zurückfallen.

Figur 6 deutet an, daß die gereinigten Rüben aufgrund der Schrägstellung der beiden Gliederbandförderer 78 anschließend seitlich auf eine Verteilerschnecke 82 fallen, welche die Rüben in den anschließenden Sammelraum 84 (Bunker) befördert. Der Sammelraum 84 kann in bekannter Weise mit einer Einrichtung 86 zum Überladen der Rüben auf einen Anhänger ausgerüstet sein.

In Figur 7 ist angedeutet, daß das Fahrgestell 12 der Vorrichtung einen vorn abgeknickten Rahmenteil 88 hat, an dem die Blattschneideeinheit 24 und die Rodeeinheit 28 so aufgehängt sind, daß sie nicht rechtwinklig zur Längsachse 90 der Vorrichtung verlaufen, sondern schräg zu dieser (Winkel ). Die Größe dieses Winkels beträgt etwa 2°. Außerdem ist die Vorderachse 92 der beiden Vorderräder 14 ebenfalls nicht parallel zur Hinterachse 94 angeordnet, sondern winklig zu dieser (Winkel ) und ferner zur Längsachse 90 um den Betrag a versetzt. Der Abstand a liegt in der Größenordnung von 10 cm.

Mit den beschriebenen Maßnahmen kann die Vorrichtung, deren Vorderräder 14 und Hinterräder 16 lenkbar sind, in zwei unterschiedlichen Weisen eingesetzt werden. Dies ist in Figur 8 angedeutet. Diese zeigt in Draufsicht einen Ausschnitt aus einem Feld mit mehreren Reihen, von denen die erste Reihe bereits abgeerntet ist und die zweite Reihe gerade abgeerntet wird. Da hier die Vorrichtung zwischen einer linken Feldbegrenzung, beispielsweise einer Mauer, und dem auf der vierten Reihe angrenzenden Rübenbestand durchfahren muß, müssen zu beiden Seiten hin genaue Abstände eingehalten werden. Hierzu wird die Vorrichtung so durchgefahren daß die Blattschneideeinheit 24 und die Rodeeinheit 28 schräg verlaufen. Dabei fährt das rechte Hinterrad 16 eng am angrenzenden Rübenbestand entlang, während das Vorderrad einen Abstand 2a vom Rübenbestand hat. Der Fahrer kann diesen Abstand 2a verhältnismäßig einfach von seiner Fahrerkabine 18 aus einhalten. Wenn anschließend die dritte Reihe und die folgenden Reihe abgeerntet werden, kann die Vorrichtung so durchgefahren werden, daß die Blattschneideeinheit 24 und die Rodeeinheit 28 rechtwinklig zur Fahrtrichtung f verlaufen, so daß das rechte Vorderrad 14 und das rechte Hinterrad 16 mit genügendem Abstand vom noch abzuerntenden Rübenbestand fahren, denn das linke Vorderrad 14 und insbesondere das linke Hinterrad 16 können bei dieser Arbeitsweise wenigstens teilweise auf dem schon abgeernteten Streifen fahren. Diese Art des Einsatzes wird mit Hundegang bezeichnet.

## Patentansprüche

1. Vorrichtung zum Ernten von Feldfrüchten, insbesondere Rüben, mit einem Fahrgestell, an dem eine Blattschneideeinheit sowie eine Rodeeinheit (28) mit einer Reihe von an einem Träger angeordneten Rodescharen (30) gelagert sind, an die sich Stetigförderer für die Weiterleitung der geernteten Feldfrüchte zu einem Sammelraum anschließen, und mit Tasträdem (48) die relativ zu der Rodeeinheit (28) höhenverstellbar sind, dadurch gekennzeichnet, daß Tasträder (48) zwischen allen Rodescharen (30) der Rodeeinheit (28) angeordnet und auf einer gemeinsamen Welle (50) gelagert sind.

2. Vorrichtung nach Anspruch 1, dadurch gekennzeichnet, daß der als Querbalken (32) ausgebildete Träger der Rodeschare (30) über Längslenker (42) am Fahrgestell (12) winkelbeweglich aufgehängt ist.

3. Vorrichtung nach Anspruch 2, dadurch gekennzeichnet, daß die Längslenker (42) mittels eines Kugelgelenks (44) o. dgl am Fahrgestell (12) gelagert sind.

4. Vorrichtung nach einem der Ansprüche 1 bis 3, dadurch gekennzeichnet, daß der Träger (32) der Rodeschare (30) über eine Vertikalführung (64,66) mit einem Rahmen (52,54) verbunden ist, in dem die gemeinsame Welle (50) der Tasträder (48) gelagert ist.

5. Vorrichtung nach Anspruch 4, dadurch gekennzeichnet, daß zur Vertikalverstellung des Rahmens (52,54) relativ zu dem Träger (32) wenigstens eine Hydraulikeinheit (60) vorgesehen ist.

6. Vorrichtung nach einem der Ansprüche 4 oder 5, dadurch gekennzeichnet, daß am Rahmen (52,54) in Fahrtrichtung hinter der Rodeeinheit (28) die Rüben zur Mitte fördernde Schneckenwellen (68) angeordnet sind.

7. Vorrichtung nach einem der vorhergehenden Ansprüche, dadurch gekennzeichnet, daß die Rodeeinheit (28) über einen Hydraulikzylinder (40) in Fahrtrichtung quer zur Blattschneideeinheit (24) verstellbar ist.

8. Vorrichtung nach Anspruch 7, dadurch gekennzeichnet, daß der Hydraulikzylinder (40) über zwei Steuerleitungen (38) mit wenigstens einer Sensoreinheit (36) verbunden ist, die bei der Überschreitung vorgegebener Horizontalverstellwege einer zugeordneten Rodeschar (30) anspricht.

9. Vorrichtung nach einem der vorhergehenden Ansprüche, dadurch gekennzeichnet, daß die Blattschneideeinheit (24) über einen Längsbalken (20) mittels einer horizontalen Schwenkachse (22) quer zur Fahrtrichtung schwenkbar am Fahrgestell (12) aufgehängt ist.

10. Vorrichtung nach Anspruch 9, dadurch gekennzeichnet, daß der Längsbalken (20) über eine Hydraulikeinheit (46) mit der Rodeeinheit (28) verbunden ist.

11. Vorrichtung nach Anspruch 9 oder 10, dadurch gekennzeichnet daß der Längsbalken (20) mittels eines Hydraulikzylinders (26) heb- und senkbar am Fahrgestell (12) aufgehängt ist.

12. Vorrichtung nach einem der Ansprüche 6 bis 11, dadurch gekennzeichnet, daß in Fahrtrichtung hinter den Schneckenwellen (68) ein Gliederbandförderer (70) zum Weiterleiten der Feldfrüchte zu Vorreinigungs-Siebrädern (72) angeordnet ist.

13. Vorrichtung nach Anspruch 12, dadurch gekennzeichnet, daß in Förderrichtung hinter den Siebrädern (72) ein Elevator (74) für den Transport der Feldfrüchte in eine Nachreinigungseinrichtung (76) vorgesehen ist.

14. Vorrichtung nach Anspruch 13, dadurch gekennzeichnet, daß die Nachreinigungseinrichtung (76) aus zwei in Fahrtrichtung hintereinanderliegenden, gegenläufigen Gliederbandförderern (78) besteht, denen jeweils ein schräg nach oben führender Gliederbandförderer (80) zugeordnet ist.

15. Vorrichtung nach einem der vorhergehenden Ansprüche, dadurch gekennzeichnet, daß die Blattschneideeinheit (24) sowie die dazu i.w. parallele Rodeeinheit (28) schräg zur Längsachse (90) der Vorrichtung angeordnet sind.

16. Vorrichtung nach Anspruch 15, dadurch gekennzeichnet, daß die Vorderachse (92) bezüglich der Hinterachse in Querrichtung versetzt angeordnet ist.

17. Vorrichtung nach Anspruch 16, dadurch gekennzeichnet, daß die Vorderachse (92) winklig zur Hinterachse verläuft.

## Claims

1. Device for harvesting arable crop, in particular root vegetables, having a chassis on which there are mounted a cutter blade unit and a digger unit (28) having a row of digger shares (30) which are arranged on a support and to which continuous conveyors for the further conveyance of the harvested arable crop to a collecting compartment are attached, and having feeler wheels (48) which are height-adjustable relative to the digger unit (28), characterized in that feeler wheels (48) are arranged between all the digger shares (30) of the digger unit (28) and mounted on a common shaft (50).

2. Device according to Claim 1, characterized in that the support of the digger share (30), constructed as a transverse bar (32), is suspended so as to be movable at an angle on the chassis (12) by way of longitudinal steering means (42).

3. Device according to Claim 2, characterized in that the longitudinal steering means (42) are mounted on the chassis (12) by means of a ball-and-socket joint (44) or the like.

4. Device according to one of Claims 1 to 3, characterized in that the support (32) of the digger share (30) is connected by way of a vertical guide (64, 66) to a frame (52, 54) in which the common shaft (50) of the feeler wheels (48) is mounted.

5. Device according to Claim 4, characterized in that for the vertical adjustment of the frame (52, 54) relative to the support (32) at least one hydraulic unit (60) is provided.

6. Device according to one of Claims 4 or 5, characterized in that helical shafts (68) conveying the root vegetables to the centre are arranged on the frame (52, 54) behind the digger unit (28), as seen in the direction of travel.

7. Device according to one of the preceding claims, characterized in that the digger unit (28) may be adjusted by way of a hydraulic cylinder (40), transversely with respect to the cutter blade unit (24), as seen in the direction of travel.

8. Device according to Claim 7, characterized in that the hydraulic cylinder (40) is connected by way of two control lines (38) to at least one sensor unit (36) which responds when a predetermined horizontal adjustment travel of an associated digger share (30) is exceeded.

9. Device according to one of the preceding claims, characterized in that the cutter blade unit (24) is suspended by way of a longitudinal bar (20) by means of a horizontal pivot axle (22) so as to be pivotal on the chassis (12) transversely with respect to the direction of travel.

10. Device according to Claim 9, characterized in that the longitudinal bar (20) is connected by way of a hydraulic unit (46) to the digger unit (28).

11. Device according to Claim 9 or 10, characterized in that the longitudinal bar (20) is suspended on the chassis (12) by means of a hydraulic cylinder (26) so as to be raisable and lowerable.

12. Device according to one of Claims 6 to 11, characterized in that behind the helical shafts (68), as seen in the direction of travel, a chain conveyor belt (70) is arranged for further conveying the arable crop to pre-cleaning sieving wheels (72).

13. Device according to Claim 12, characterized in that behind the sieving wheels (72), as seen in the direction of conveying, an elevator (74) is provided for transporting the arable crop into a subsequent cleaning device (76).

14. Device according to Claim 13, characterized in that the subsequent cleaning device (76) comprises two chain conveyor belts (78) located behind one another, as seen in the direction of travel, and running in opposite directions, with each of which chain conveyor belts (78) there is associated a chain conveyor belt (80) running obliquely upward.

15. Device according to one of the preceding claims, characterized in that the cutter blade unit (24) and the digger unit (28) substantially parallel thereto are arranged obliquely with respect to the longitudinal axis (90) of the device.

16. Device according to Claim 15, characterized in that the front axle (92) is offset in the transverse direction with respect to the rear axle.

17. Device according to Claim 16, characterized in that the front axle (92) runs at an angle with respect to the rear axle.

## Revendications

1. Machine de récolte de produits agricoles, notamment de betteraves, comprenant, d'une part, un châssis sur lequel sont montées une unité de coupe des feuilles, ainsi qu'une unité d'arrachage (28) qui comporte une rangée de socs d'arrachage (30) disposés sur un support et qui est suivie de transporteurs continus permettant de transporter les produits agricoles récoltés jusqu'à une enceinte collectrice et, d'autre part, des roues de palpage (48) qui sont agencées de façon que leur position en hauteur par rapport à l'unité d'arrachage (28) puisse être réglée, caractérisée en ce que des roues de palpage (48) sont disposées entre tous les socs d'arrachage (30) de l'unité d'arrachage (28) et sont montées sur un arbre commun (50).

2. Machine suivant la revendication 1, caractérisée en ce que le support des socs d'arrachage (30), formé d'une poutre transversale (32), est suspendu au châssis (12) d'une manière angulairement mobile au moyen de bras oscillants longitudinaux (42).

3. Machine suivant la revendication 2, caractérisée en ce que les bras oscillants longitudinaux (42) sont montés sur le châssis (12) au moyen d'une articulation (44) à rotule ou d'un organe analogue.

4. Machine suivant l'une des revendications 1 à 3, caractérisée en ce que le support (32) des socs d'arrachage (30) est relié par des moyens de guidage vertical (64, 66) à un bâti (52, 54) dans lequel l'arbre commun (50) des roues de palpage (48) est monté.

5. Machine suivant la revendication 4, caractérisée en ce qu'au moins un vérin hydraulique (60) est prévu pour le réglage de la position verticale du bâti (52, 54) vis-à-vis du support (32).

6. Machine suivant l'une des revendications 4 et 5, caractérisée en ce que des arbres à vis sans fin (68), qui déplacent les betteraves vers le milieu, sont disposés sur le bâti (52, 54) derrière l'unité d'arrachage (28) dans la direction de déplacement.

7. Machine suivant l'une des revendications précédentes, caractérisée en ce que, au moyen d'un vérin hydraulique (40), la position de l'unité d'arrachage (28) peut être réglée transversalement, par rapport à la direction de déplacement, vis-à-vis de l'unité (24) de coupe des feuilles.

8. Machine suivant la revendication 7, caractérisée en ce que le vérin hydraulique (40) est relié, par deux conducteurs de commande (38), à au moins une unité de détection (36) qui réagit lorsqu'un soc d'arrachage (30) correspondant franchit une course préfixée de déplacement horizontal.

9. Machine suivant l'une des revendications précédentes, caractérisée en ce qu'au moyen d'une poutre longitudinale (20), l'unité (24) de coupe des feuilles est montée de manière oscillante sur le châssis (12) autour d'un axe horizontal de pivotement (22) disposé transversalement par rapport à la direction de déplacement.

10. Machine suivant la revendication 9, caractérisée en ce que la poutre longitudinale (20) est reliée à l'unité d'arrachage (28) par un vérin hydraulique (46).

11. Machine suivant la revendication 9 ou 10, caractérisée en ce qu'au moyen d'un vérin hydraulique (26), la poutre longitudinale (20) est montée sur le châssis (12) de façon à pouvoir être soulevée ou abaissée.

12. Machine suivant l'une des revendications 6 à 11, caractérisée en ce que, derrière les arbres à vis sans fin (68) dans la direction de déplacement, il est prévu un transporteur à palettes articulées (70) servant à acheminer les produits agricoles jusqu'à des roues de criblage (72) servant à un pré-nettoyage.

13. Machine suivant la revendication 12, caractérisée en ce que, derrière les roues de criblage (72) dans la direction de déplacement, il est prévu un dispositif élévateur (74) servant à transporter les produits agricoles dans un dispositif de nettoyage principal (76).

14. Machine suivant la revendication 13, caractérisée en ce que le dispositif de nettoyage principal (76) est constitué de deux transporteurs (78) à palettes articulées qui sont disposés l'un derrière l'autre, dans la direction de déplacement, et tournent dans des sens opposés et à chacun desquels est associé un transporteur (80) à palettes articulées incliné vers le haut.

15. Machine suivant l'une des revendications précédentes, caractérisé en ce que l'unité (24) de coupe des feuilles et l'unité d'arrachage (28), qui est essentiellement parallèle à cette dernière, sont disposées d'une manière inclinée vis-à-vis de l'axe longitudinal (90) de la machine.

16. Machine suivant la revendication 15, caractérisée en ce que l'essieu avant (92) est disposé d'une manière décalée dans la direction transversale par rapport à l'essieu arrière.

17. Machine suivant la revendication 16, caractérisée en ce que l'essieu avant (92) est orienté d'une manière angulaire vis-à-vis de l'essieu arrière.
